# EUROPÄISCHE PATENTANMELDUNG

(11) **EP 2 364 060 A1**
(43) Veröffentlichungstag der Anmeldung: **07.09.2011**
(21) Anmeldenummer: 10155012.7
(22) Anmeldetag: 01.03.2010
(51) Int. Cl.: H05B 33/08

(54) **Leuchteinrichtung zur Kennzeichnung und Markierung von Verkehrsflächen von Flughäfen**

(71) Anmelder: Hella KGaA Hueck & Co., 59552 Lippstadt (DE)
(72) Erfinder: Abel, Björn, 59590 Geseke (DE); Decius, Nikolaus, 59558 Lippstadt (DE); Rupprath, Bernhard, 59556 Lippstadt (DE)

(57) **Zusammenfassung**

Die vorliegende Erfindung betrifft eine Leuchteinrichtung (1), geeignet zur Kennzeichnung und Markierung von Verkehrsflächen von Flughäfen, umfassend mindestens ein Halbleiter-Leuchtmittel (2) und eine elektronische, an ein elektrisches Wechselstromversorgungsnetz anschließbare Steuerschaltung zur Steuerung des Betriebs des mindestens einen Halbleiter-Leuchtmittels (2), wobei die Steuerschaltung ein Gleichrichtermittel (5) aufweist, das trafolos an das elektrische Wechselstromversorgungsnetz anschließbar ist, und eine interne Stromversorgungseinrichtung (6), die an das Gleichrichtermittel (5) angeschlossen ist, zur Versorgung des mindestens einen Halbleiter-Leuchtmittels (2) mit einem elektrischen Gleichstrom umfasst, wobei die interne Spannungsversorgungseinrichtung (3) elektronische Blindleistungskompensationsmittel aufweist, mittels derer in allen Betriebszuständen der Leuchteinrichtung (1) Spannung und Strom in Phase gehalten werden können.

## Beschreibung

Die vorliegende Erfindung betrifft eine Leuchteinrichtung nach dem Oberbegriff des Anspruchs 1, die zur Kennzeichnung und Markierung von Verkehrsflächen von Flughäfen, wie zum Beispiel Startbahnen, Landebahnen oder Rollbahnen, geeignet ist.

Leuchteinrichtungen der eingangs genannten Art, die zur Kennzeichnung und Markierung von Verkehrsflächen von Flughäfen und zur Signalabgabe geeignet sind, sind aus dem Stand der Technik in verschiedenen Ausführungsformen bereits bekannt. So verfügen zum Beispiel Start- und Landebahnen sowie Rollbahnen von Flughäfen über entsprechende Leuchteinrichtungen, welche zum Beispiel den Anfang, das Ende und die Mitte einer Bahn sowie darüber hinaus auch einzelne Abschnitte der Bahn markieren können. Bei derartigen Leuchteinrichtungen werden sehr häufig Halogen-Leuchtmittel eingesetzt, die eine typische Lebensdauer in einer Größenordnung von etwa 1000 bis 1500 Stunden haben und damit erfahrungsgemäß relativ häufig ausgetauscht werden müssen. Ein weiterer Nachteil von Halogen-Leuchtmitteln besteht darin, dass sie während ihres Betriebs relativ viel Energie verbrauchen.

Aus dem Stand der Technik ist es bereits bekannt, bei Leuchteinrichtungen, die zur Kennzeichnung und Markierung von Verkehrsflächen von Flughäfen geeignet sind, die Halogen-Leuchtmittel durch Leuchtmittel auf Halbleiterbasis zu ersetzen. Die EP 0 898 683 B1 sowie die EP 0 898 684 B1 offenbaren entsprechende Leuchteinrichtungen der eingangs genannten Art zur direkten Abstrahlung von sichtbarem Licht. Um den Energieverbrauch und den Wartungsaufwand zu reduzieren, sind die Lichtquellen als Halbleiterelemente, insbesondere als Leuchtdioden, ausgebildet. Im Vergleich zu Halogen-Leuchtmitteln weisen Leuchtdioden eine wesentlich geringere thermische Verlustleistung und gleichzeitig eine höhere Lebensdauer und Zuverlässigkeit auf. Um die Intensität der Lichtabstrahlung der Halbleiterelemente gesteuert variieren zu können, ist bei den vorbekannten Lösungen eine entsprechende Steuereinrichtung vorgesehen. Weitere Leuchteinrichtungen zur Kennzeichnung und Markierung von Verkehrsflächen von Flughäfen, bei denen Halbleiterelemente als Lichtquellen eingesetzt werden, sind zum Beispiel aus der WO 2009/077010 A1, der WO 97/44614 A1 oder der WO 97/44612 A1 bekannt.

Ein Nachteil der aus dem Stand der Technik bekannten Leuchteinrichtungen besteht darin, dass zur Anpassung des für den Betrieb des mindestens einen Halbleiterelements vorgesehen Steuerschaltkreises an das Versorgungsnetz (Wechselstromnetz) ein zusätzlicher Transformator benötigt wird. Das Vorsehen dieses zusätzlichen Transformators führt zu einem höheren Gewicht der Leuchteinrichtung und verursacht zusätzliche Kosten für die Herstellung. Darüber hinaus ist eine besondere Aufbau- und Verbindungstechnik erforderlich, die bei hohen Anforderungen an die Vibrations- und Stoßfestigkeit einen erheblichen konstruktiven Aufwand zur Folge hat.

Hier setzt die vorliegende Erfindung an und macht es sich zur Aufgabe, eine Leuchteinrichtung der eingangs genannten Art zur Kennzeichnung und Markierung von Verkehrsflächen von Flughäfen zu schaffen, die einfacher und kostengünstiger herstellbar ist und im Vergleich zu den aus dem Stand der Technik bekannten Leuchteinrichtungen ein geringeres Gewicht aufweist und einen kleineren Bauraum benötigt.

Die Lösung dieser Aufgabe liefert eine Leuchteinrichtung der eingangs genannten Art mit den Merkmalen des kennzeichnenden Teils des Anspruchs 1. Die Unteransprüche betreffen vorteilhafte Weiterbildungen der Erfindung.

Eine erfindungsgemäße Leuchteinrichtung zeichnet sich dadurch aus, dass die Steuerschaltung ein Gleichrichtermittel aufweist, das trafolos an das elektrische Wechselstromversorgungsnetz anschließbar ist, und eine interne Stromversorgungseinrichtung, die an das Gleichrichtermittel angeschlossen ist, zur Versorgung des mindestens einen Halbleiter-Leuchtmittels mit einem elektrischen Gleichstrom umfasst, wobei die interne Stromversorgungseinrichtung elektronische Blindleistungskompensationsmittel aufweist, mittels derer Spannung und Strom in allen Betriebszuständen der Leuchteinrichtung in Phase gehalten werden können. Die elektronische Steuerschaltung der erfindungsgemäßen Leuchteinrichtung benötigt in vorteilhafter Weise keinen netzseitigen Transformator, da die elektronischen Blindleistungskompensationsmittel der Stromversorgungseinrichtung dafür sorgen, dass in allen Betriebszuständen der Leuchteinrichtung der Strom und die Spannung in Phase liegen. Der netzseitig vorgegebene Strom kann dadurch auch bei einem kleinen Leistungsbedarf der elektronischen Steuerschaltung fließen, wofür die eingangsseitige Klemmenspannung entsprechend nachgeregelt wird. Die erfindungsgemäße Leuchteinrichtung ermöglicht in vorteilhafter Weise eine effiziente, trafolose und damit kostengünstige Ansteuerung des mindestens einen Halbleiter-Leuchtmittels, welches vorzugsweise eine Leuchtdiode ist, aus einem Wechselstromversorgungsnetz mit Konstantstromspeisung. Die erfindungsgemäße Ansteuerschaltung zur Ansteuerung des mindestens einen Halbleiter-Leuchtmittels verhält sich netzseitig wie ein ohmscher Verbraucher und kann somit auf einfache Weise ein Halogen-Leuchtmittel ersetzen. Darüber hinaus kann in vorteilhafter Weise auch auf die mit der Verwendung eines eingangsseitigen Transformators verbundene Aufbau- und Verbindungstechnik verzichtet werden, die bei den aus dem Stand der Technik bekannten Lösungen einen erheblichen konstruktiven Aufwand erfordert. Die Steuerschaltung der erfindungsgemäßen Leuchteinrichtung ist einfacher, langlebiger, flexibler, preiswerter und zuverlässiger als die aus dem Stand der Technik bekannten Lösungen. Es besteht die Möglichkeit, dass die Leuchteinrichtung mehrere Halbleiter-Leuchtmittel aufweist, die mittels einer einzelnen elektronischen Steuerschaltung betrieben werden können. Auf Grund ihrer kompakten Bauform ist die erfindungsgemäße Leuchteinrichtung besonders für eine Unterflurmontage, bei der nur ein geringer Bauraum zur Verfügung steht, geeignet. In einer besonders bevorzugten Ausführungsform wird vorgeschlagen, dass das Gleichrichtermittel ein synchronisiertes Gleichrichtermittel ist.

In einer besonders vorteilhaften Ausführungsform ist vorgesehen, dass die Steuerschaltung eine zentrale Steuerungseinrichtung und ein Treibermittel umfasst, mittels derer die Helligkeit des mindestens einen Halbleiter-Leuchtmittels gesteuert eingestellt werden kann. Dadurch kann eine hohe Betriebssicherheit der Leuchteinrichtung erhalten und eine hohe Flexibilität erreicht werden.

Um die Helligkeit des Halbleiter-Leuchtmittels auf einfache Weise einstellen zu können, besteht in einer besonders vorteilhaften Ausführungsform die Möglichkeit, dass die Steuerschaltung ein Stromerfassungsmittel zur Erfassung des während des Betriebs der Leuchteinrichtung fließenden Stroms aufweist. Vorzugsweise kann das Stromerfassungsmittel einen Tiefpassfilter umfassen. Ein Tiefpassfilter lässt Signalfrequenzen unterhalb einer festgelegten Grenzfrequenz ungeschwächt passieren, wohingegen Signalanteile hoher Frequenzen oberhalb der Grenzfrequenz abgeschwächt werden. Dadurch kann der während des Betriebs der Leuchteinrichtung fließende Strom besonders zuverlässig und genau gemessen werden.

In einer besonders vorteilhaften Ausführungsform wird vorgeschlagen, dass die Leuchteinrichtung Sender- und Empfängermittel umfasst, die für eine Datenkommunikation der Leuchteinrichtung mit einer externen Steuerungszentrale eingerichtet sind. Vorzugsweise können die Sender- und Empfängermittel für eine Datenkommunikation über das Wechselstromversorgungsnetz eingerichtet sein. Dadurch, dass die Leuchteinrichtung trafolos ausgeführt ist, ist es in vorteilhafter Weise möglich, dass Daten (beispielsweise Ansteuerungsdaten oder Zustandsdaten) über das elektrische Wechselstromversorgungsnetz von der Steuerungszentrale des Flughafens zu der Leuchteinrichtung hin beziehungsweise von der Leuchteinrichtung zu der Steuerungszentrale des Flughafens zurück übertragen werden können.

In einer bevorzugten Ausführungsform wird vorgeschlagen, dass die Ansteuerschaltung ein Temperaturerfassungsmittel aufweist, geeignet, die Temperatur des mindestens einen Halbleiter-Leuchtmittels zu erfassen. Durch Messung der Temperatur des Halbleiter-Leuchtmittels, die der Steuerungseinrichtung als Eingangssignal zur Verfügung gestellt wird, ist in vorteilhafter Weise - insbesondere bei einer erhöhten Temperatur des Halbleiter-Leuchtmittels, bei der die Verlustleistung erhöht ist - eine optische Kompensation durch Anpassung der Lichtleistung des mindestens einen Halbleiter-Leuchtmittels möglich.

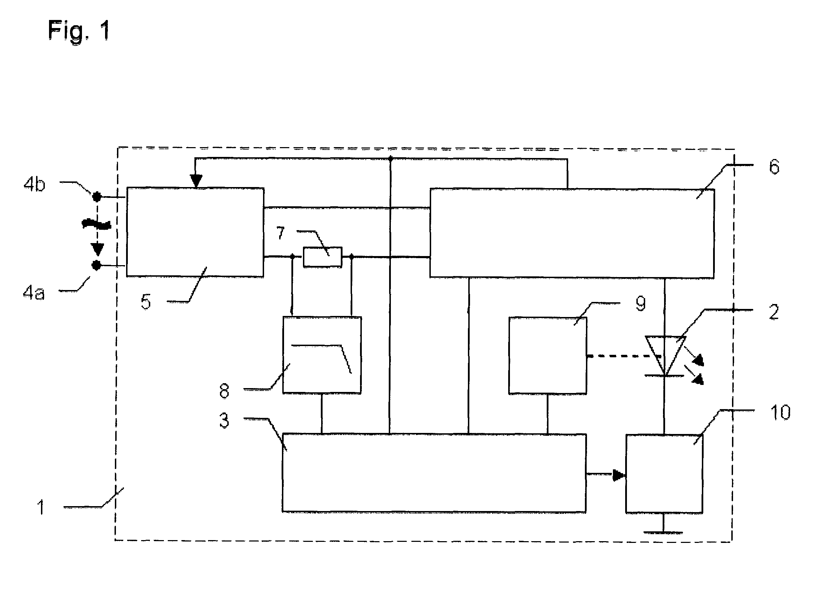

Anhand der beigefügten Fig. 1, die eine Prinzipschaltung eines bevorzugten Ausführungsbeispiels einer Leuchteinrichtung 1 zeigt, die insbesondere zur Kennzeichnung und Markierung von Verkehrsflächen von Flughäfen, wie zum Beispiel Startbahnen, Landebahnen oder Rollbahnen, geeignet ist, wird die Erfindung nachfolgend näher erläutert.

Die Leuchteinrichtung 1 umfasst in diesem Ausführungsbeispiel ein Halbleiter-Leuchtmittel 2, das vorzugsweise eine Leuchtdiode ist, und eine elektronische Steuerschaltung zum Ansteuern des Halbleiter-Leuchtmittels 2. Die elektronische Steuerschaltung weist zwei Anschlussmittel 4a, 4b auf, mit Hilfe derer die Leuchteinrichtung 1 an ein elektrisches Wechselstromversorgungsnetz angeschlossen werden kann. Ferner weist die elektronische Steuerschaltung ein Gleichrichtermittel 5, eine interne Stromversorgungseinrichtung 6, die an das Gleichrichtermittel 5 angeschlossen ist, zur Versorgung des Halbleiter-Leuchtmittels 2 mit elektrischem Gleichstrom sowie eine zentrale Steuerungseinrichtung 3 auf. Die zentrale Steuerungseinrichtung 3 umfasst vorzugsweise einen Mikrocontroller oder eine anwendungsspezifische elektronische Schaltung. Das Gleichrichtermittel 5 ist vorzugsweise als synchronisiertes Gleichrichtermittel ausgeführt. Die interne Stromversorgungseinrichtung 6 weist elektronische Blindleistungskompensationsmittel auf, die während des Betriebs der Leuchteinrichtung 1 dafür sorgen, dass in sämtlichen Betriebszuständen der Strom und die Spannung in Phase liegen. Der netzseitig vorgegebene Strom kann dadurch auch bei einem kleinen Leistungsbedarf der elektronischen Steuerschaltung fließen, wofür die eingangsseitige Klemmenspannung entsprechend nachgeregelt wird.

Ferner ist ein Messwiderstand 7 vorgesehen, mittels dessen die Stärke des aktuell fließenden elektrischen Stroms über einen Tiefpassfilter 8 gemessen und der zentralen Steuerungseinrichtung 3 als analoges Eingangssignal zur Verfügung gestellt wird. In der zentralen Steuerungseinrichtung 3 wird aus den gemessenen Strömen nach der Methode der quadratischen Mittelung (englisch: "Root Mean Square", RMS) ein mittlerer Stromwert bestimmt. Auf diese Weise kann die gewünschte Helligkeit des Halbleiter-Leuchtmittels 2 bestimmt werden, wobei durch verschiedene Konstantströme und/oder getakteten Betrieb die Helligkeit des Halbleiter-Leuchtmittels 2 vorgegeben werden kann. Bei einer Unterbrechung des Stromkreises erkennt eine netzseitige Messeinrichtung eine Veränderung der Klemmenspannung und kann auf diese Weise eine Fehlfunktion detektieren.

Die zentrale Steuerungseinrichtung 3 steuert über einen digitalen Ausgang ein Treibermittel 10 an, welches den Stromfluss durch das Halbleiter-Leuchtmittel 2 freigibt. Ferner wird die Größe des durch das Halbleiter-Leuchtmittel 2 fließendenden Stroms mittels der zentralen Steuerungseinrichtung 3, die an die interne Stromversorgungseinrichtung 6 angeschlossen ist, vorgegeben. Die elektronische Steuerschaltung umfasst ferner ein Temperaturerfassungsmittel 9, mittels dessen die Temperatur des Halbleiter-Leuchtmittels 2 während des Betriebs der Leuchteinrichtung 1 erfasst werden kann. Eine Erhöhung der Temperatur des Halbleiter-Leuchtmittels 2 geht mit einer höheren elektrischen Verlustleistung einher. Die gemessene Temperatur wird der zentralen Steuerungseinrichtung 3 als analoges Eingangssignal zur Verfügung gestellt. Über die mit Hilfe des Temperaturerfassungsmittels gemessene Temperatur kann unter anderem das Halbleiter-Leuchtmittel 2 optisch kompensiert werden, indem die Lichtleistung des Halbleiter-Leuchtmittels 2 entsprechend angepasst wird.

Mit Hilfe der hier beschriebenen elektronischen Steuerschaltung kann die Leuchteinrichtung 1 trafolos an einem herkömmlichen Wechselstromversorgungsnetz betrieben werden. Der kostenintensive und schwere eingangsseitige Transformator, der bei herkömmlichen Leuchteinrichtungen mit Halbleiter-Leuchtmitteln stets vorhanden ist, kann somit in vorteilhafter Weise entfallen. Darüber hinaus kann auch auf die mit der Verwendung eines eingangsseitigen Transformators verbundene Aufbau- und Verbindungstechnik verzichtet werden, welche bei hohen Anforderungen an die Vibrations- und Stoßfestigkeit einen erheblichen konstruktiven Aufwand erfordern. Die hier beschriebene Steuerschaltung der Leuchteinrichtung 1 zur Ansteuerung der mindestens einen Halbleiterlichtquelle 2 verhält sich netzseitig wie ein ohmscher Verbraucher und kann somit auf einfache Weise ein Halogen-Leuchtmittel, wie es bei herkömmlichen Leuchteinrichtungen zur Kennzeichnung und Markierung von Verkehrsflächen von Flughäfen häufig verwendet wird, in vorteilhafter Weise ersetzen.

Darüber hinaus kann die Leuchteinrichtung 1 Sender- und Empfängermittel umfassen, die für eine Datenkommunikation der Leuchteinrichtung 1 mit einer externen Steuerungszentrale des Flughafens eingerichtet sind. Vorzugsweise können die Sender- und Empfängermittel für eine Datenkommunikation über das Wechselstromversorgungsnetz eingerichtet sein. Dadurch, dass die Leuchteinrichtung 1 trafolos ausgeführt ist, ist es in vorteilhafter Weise möglich, dass Daten (beispielsweise Ansteuerungsdaten oder Zustandsdaten) über das elektrische Versorgungsnetz von der Steuerungszentrale des Flughafens zu der Leuchteinrichtung beziehungsweise von der Leuchteinrichtung zu der Steuerungszentrale des Flughafens übertragen werden können. Durch den Wegfall eines eingangsseitigen Transformators ist die Kommunikation über das Wechselstromversorgungsnetz weniger aufwändig, da sich ein derartiger Transformator negativ auf die Kommunikationsgeschwindigkeit auswirken kann.

### Bezugszeichenliste

- 1: Leuchteinrichtung
- 2: Halbleiter-Leuchtmittel
- 3: Steuerungseinrichtung
- 4a, 4b: Anschlussmittel
- 5: Gleichrichtermittel
- 6: Stromversorgungseinrichtung
- 7: Messwiderstand
- 8: Tiefpassfilter
- 9: Temperaturerfassungsmittel
- 10: Treibermittel

## Patentansprüche

1. Leuchteinrichtung (1), geeignet zur Kennzeichnung und Markierung von Verkehrsflächen von Flughäfen, umfassend mindestens ein Halbleiter-Leuchtmittel (2) und eine elektronische, an ein elektrisches Wechselstromversorgungsnetz anschließbare Steuerschaltung zur Steuerung des Betriebs des mindestens einen Halbleiter-Leuchtmittels (2), **dadurch gekennzeichnet, dass** die Steuerschaltung ein Gleichrichtermittel (5) aufweist, das trafolos an das elektrische Wechselstromversorgungsnetz anschließbar ist, und eine interne Stromversorgungseinrichtung (6), die an das Gleichrichtermittel (5) angeschlossen ist, zur Versorgung des mindestens einen Halbleiter-Leuchtmittels (2) mit einem elektrischen Gleichstrom umfasst, wobei die interne Stromversorgungseinrichtung (3) elektronische Blindleistungskompensationsmittel aufweist, mittels derer in allen Betriebszuständen der Leuchteinrichtung (1) Spannung und Strom in Phase gehalten werden können.

2. Leuchteinrichtung (1) nach Anspruch 1, **dadurch gekennzeichnet, dass** das Gleichrichtermittel (5) ein synchronisiertes Gleichrichtermittel ist.

3. Leuchteinrichtung (1) nach Anspruch 1 oder 2, **dadurch gekennzeichnet, dass** die Steuerschaltung eine zentrale Steuerungseinrichtung (3) und ein Treibermittel (10) umfasst, mittels derer die Helligkeit des mindestens einen Halbleiter-Leuchtmittels (2) gesteuert eingestellt werden kann.

4. Leuchteinrichtung (1) nach einem der Ansprüche 1 bis 3, **dadurch gekennzeichnet, dass** die elektronische Steuerschaltung Stromerfassungsmittel zur Erfassung des während des Betriebs der Leuchteinrichtung (1) fließenden Stroms aufweist.

5. Leuchteinrichtung (1) nach Anspruch 4, **dadurch gekennzeichnet, dass** die Stromerfassungsmittel einen Tiefpassfilter (7) umfassen.

6. Leuchteinrichtung (1) nach einem der Ansprüche 1 bis 5, **dadurch gekennzeichnet, dass** die elektronische Steuerschaltung ein Temperaturerfassungsmittel (9) aufweist, mittels dessen die Temperatur des Halbleiter-Leuchtmittels (2) erfasst werden kann.

7. Leuchteinrichtung (1) nach einem der Ansprüche 1 bis 6, **dadurch gekennzeichnet, dass** die Leuchteinrichtung (1) Sender- und Empfängermittel umfasst, die für eine Datenkommunikation der Leuchteinrichtung (1) mit einer externen Steuerungszentrale eingerichtet sind.

8. Leuchteinrichtung (1) nach Anspruch 7, **dadurch gekennzeichnet, dass** die Sender- und Empfängermittel für eine Datenkommunikation über das Wechselstromversorgungsnetz eingerichtet sind.

## Geänderte Patentansprüche

### Geänderte Patentansprüche gemäss Regel 137(2) EPÜ.

**1.** Leuchteinrichtung (1), geeignet zur Kennzeichnung und Markierung von Verkehrsflächen von Flughäfen, umfassend mindestens ein Halbleiter-Leuchtmittel (2) und eine elektronische, an ein elektrisches Wechselstromversorgungsnetz mit Konstantstromspeisung anschließbare Steuerschaltung zur Steuerung des Betriebs des mindestens einen Halbleiter-Leuchtmittels (2), **dadurch gekennzeichnet, dass** die Steuerschaltung ein Gleichrichtermittel (5) aufweist, das trafolos an das elektrische Wechselstromversorgungsnetz anschließbar ist, und eine interne Stromversorgungseinrichtung (6), die an das Gleichrichtermittel (5) angeschlossen ist, zur Versorgung des mindestens einen Halbleiter-Leuchtmittels (2) mit einem elektrischen Gleichstrom umfasst, wobei die interne Stromversorgungseinrichtung (6) elektronische Blindleistungskompensationsmittel aufweist, mittels derer in allen Betriebszuständen der Leuchteinrichtung (1) Spannung und Strom in Phase gehalten werden können, und dass die elektronische Steuerschaltung Stromerfassungsmittel zur Erfassung des während des Betriebs der Leuchteinrichtung (1) fließenden Stroms aufweist.

**2.** Leuchteinrichtung (1) nach Anspruch 1, **dadurch gekennzeichnet, dass** das Gleichrichtermittel (5) ein synchronisiertes Gleichrichtermittel ist.

**3.** Leuchteinrichtung (1) nach Anspruch 1 oder 2, **dadurch gekennzeichnet, dass** die Steuerschaltung eine zentrale Steuerungseinrichtung (3) und ein Treibermittel (10) umfasst, mittels derer die Helligkeit des mindestens einen Halbleiter-Leuchtmittels (2) gesteuert eingestellt werden kann.

**4.** Leuchteinrichtung (1) nach einem der Ansprüche 1 bis 3, **dadurch gekennzeichnet, dass** die Stromerfassungsmittel einen Tiefpassfilter (7) umfassen.

**5.** Leuchteinrichtung (1) nach einem der Ansprüche 1 bis 4, **dadurch gekennzeichnet, dass** die elektronische Steuerschaltung ein Temperaturerfassungsmittel (9) aufweist, mittels dessen die Temperatur des Halbleiter-Leuchtmittels (2) erfasst werden kann.

**6.** Leuchteinrichtung (1) nach einem der Ansprüche 1 bis 5, **dadurch gekennzeichnet, dass** die Leuchteinrichtung (1) Sender- und Empfängermittel umfasst, die für eine Datenkommunikation der Leuchteinrichtung (1) mit einer externen Steuerungszentrale eingerichtet sind.

**7.** Leuchteinrichtung (1) nach Anspruch 6, **dadurch gekennzeichnet, dass** die Sender- und Empfängermittel für eine Datenkommunikation über das Wechselstromversorgungsnetz eingerichtet sind.
